(19) Europäisches Patentamt

European Patent Office

Office européen des brevets

(11) **EP 1 615 766 B1**

(12) **EUROPÄISCHE PATENTSCHRIFT**

(45) Veröffentlichungstag und Bekanntmachung des Hinweises auf die Patenterteilung:
**13.09.2006 Patentblatt 2006/37**

(51) Int Cl.:
**B32B 15/08** *(2006.01)*    **C23C 18/16** *(2006.01)*

(21) Anmeldenummer: **04727640.7**

(22) Anmeldetag: **15.04.2004**

(86) Internationale Anmeldenummer:
**PCT/IB2004/050462**

(87) Internationale Veröffentlichungsnummer:
**WO 2004/091906 (28.10.2004 Gazette 2004/44)**

(54) **VERWENDUNG EINES STROMLOS METALLISIERTEN KUNSTSTOFFSUBSTRATES ALS FORMWERKZEUG**

USE OF AN OBJECT AS SHAPING TOOL

UTILISATION D'UN OBJET COMME OUTIL DE FACONNAGE

(84) Benannte Vertragsstaaten:
**AT BE BG CH CY CZ DE DK EE ES FI FR GB GR HU IE IT LI LU MC NL PL PT RO SE SI SK TR**

(30) Priorität: **16.04.2003 DE 10317794**
**09.01.2004 DE 102004001613**

(43) Veröffentlichungstag der Anmeldung:
**18.01.2006 Patentblatt 2006/03**

(73) Patentinhaber: **AHC-Oberflächentechnik GmbH & Co. OHG**
**50171 Kerpen (DE)**

(72) Erfinder: **SAUER, Hartmut**
**57234 Wilnsdorf (DE)**

(74) Vertreter: **Dunkelberg, Oliver Thomas Michael et al**
**Dunkelberg & Partner**
**Patentanwälte**
**Düsseldorfer Landstraße 249-251**
**47259 Duisburg (DE)**

(56) Entgegenhaltungen:
**EP-A- 0 915 393        WO-A-96/25692**

EP 1 615 766 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die vorliegende Erfindung betrifft die Verwendung eines Gegenstands, dessen Oberfläche ganz oder teilweise einen Verbundwerkstoff aufweist, bestehend aus einem Polymer und einer darauf befindlichen metallischen Schicht, als Formwerkzeug.

Der konventionelle Weg, Feingussmodelle, Spritz-, Umform- und Stanzwerkzeuge herzustellen, ist, die Werkzeuge bzw. deren Modelle nach Zeichnungen auf spanenden Maschinen zu fertigen. Dementsprechend bestehen diese konventionellen Werkzeuge vornehmlich aus Materialien, die sich auf diese Weise bearbeiten lassen aber dennoch die geforderten Eigenschaften in bezug auf Härte, geringe Verformbarkeit und Maßhaltigkeit aufweisen. Beispiele für solche konventionellen Werkstoffe sind Werkzeugstahl, Einsatzstähle etc. Aufgrund der Notwendigkeit des spanabhebenden Herstellverfahrens ist es nicht möglich, Werkzeuge oder Modelle mit sehr feinen Oberflächenkonturen herzustellen, beziehungsweise entsprechende Formteile.

Werkzeuge aus einem Metall/Kunststoff-Verbundwerkstoff sind dagegen wenig bekannt. Ein Beispiel ist ein Formwerkzeug, welches eine Schale aus Werkzeugstahl aufweist, die mit polymeren Materialien, wie zum Beispiel faserverstärkte oder mit Metallpartikeln verstärkte Epoxyharze, hinterfüllt ist, um die Steifigkeit der Form sicherzustellen.

Gegenstände mit einer Oberfläche, die einen Metall/Kunststoff-Verbundwerkstoff, bestehend aus einem Polymer und einer darauf befindlichen metallischen Schicht, aufweist, sind ansonsten aus anderen Verwendungsgebieten bekannt.

Im Allgemeinen gibt es drei verschiedene Arten solcher Gegenstände:

Zum einen solche, bei denen mindestens eine Metallschicht durch ein außenstromloses Galvanisierverfahren direkt auf die Kunststoffoberfläche abgeschieden wird. Das Einsatzgebiet solcher Gegenstände ist aufgrund der bisher verwendeten Kunststoffe und der geringen Haftfestigkeit der außenstromlos aufgebrachten Metallschicht stark eingeschränkt und liegt fast ausschließlich im dekorativen Bereich, wie z.B. für verchromte Gegenstände aus ABS (Acryl-/Butadien/ Styrol-Kunststoffe) oder Polymerblends, insbesondere als Zierleisten, Duschköpfe, Kühlergrill von Automobilen und Kaffeekannen.

Zum anderen ist die Verwendung solcher Verbundwerkstoffe für elektronische Bauteile, wie für Abschirmungen im Hochfrequenzbereich, bekannt, bei denen die auf der Kunststoffoberfläche befindliche Metallschicht durch Aufdampfen von Metall auf Kunststoff in einem Vakuum (CVD/PVD-Verfahren) hergestellt wird. Hiermit werden geschlossene metallische Beschichtungen auf nichtmetallische Substrate, wie beispielsweise Kunststoffe, aufgebracht. Prinzipbedingt können aber nicht alle üblichen Gegenstände mit einer auf einer Kunststoffoberfläche befindlichen Metallschicht auf diese Weise hergestellt werden: Einerseits können keine Gegenstände mit größeren Abmessungen im industriellen Maßstab wirtschaftlich hergestellt werden; andererseits haben die Metallschichten eine Dicke von maximal 3 $\mu$m. Darüber hinaus werden Bauteile mit Vertiefungen oder Hohlräumen nicht vollständig metallisiert und die Metallschicht hat nur eine sehr geringe Haftfestigkeit, so dass ihre Verwendung für mechanisch stark beanspruchte Werkzeuge überhaupt nicht möglich ist.

Ein weit verbreitetes Anwendungsgebiet dieser Aufdampf-Technik ist die Beschichtung von Kunststofffolien, zum Beispiel für die Lebensmittelverpackung. So offenbart die DE 198 49 661 A1, eine spezielle Polyesterfolie mit Aluminium zu bedampfen, so dass sie eine hohe Sauerstoffbarriere, einen guten Glanz und einen geringen Reibungskoeffizienten aufweist. Die dort angegebenen Haftfestigkeiten von bis zu 3 N/mm sind jedoch zu gering, um in einer mechanisch beanspruchten, funktionellen Anwendung der metallisierten Folie bestehen zu können.

In der DE 43 12 926 A1 wird ein Verfahren zur Verbesserung der Haftfestigkeit von dentalen Metall-Kunststoff-Verbundschichten beschrieben. Dazu wird ein metallisches Substrat, auf dem bereits ein Polymer aufgebracht ist, mit einem speziellen Te-CO$_2$-Laser bestrahlt. Gegebenenfalls wird zusätzlich ein Haftvermittler verwendet. Eine Metallisierung von Kunststoffsubstraten wird hier nicht beschrieben.

Auch die DE 42 11 712 A1 beschreibt eine Bestrahlung der Oberfläche eines Substrates zur Verbesserung der Haftfestigkeiten mit einem Eximer-Laser. Eine PET (Polyethylenterephthalat)-Folie wird dabei mit diesem speziellen Laser bestrahlt, um anschließend mit einer ferromagnetischen Metallschicht In Rahmen eines PVD-Verfahrens bedampft zu werden. Solche Folien finden unter anderem als Audio- oder Videoaufzeichnungsmedium Verwendung.

Für spezielle Kunststoffe, wie PEES und PA, gibt es darüber hinaus ein Verfahren, bei dem die zu beschichtenden Gegenstände zunächst mit geeigneten Substanzen gequollen und anschließend chemisch geätzt werden. Die erzielten Haftfestigkeiten der aufgebrachten Metallschicht auf dem Kunststoff liegen bei maximal 2 N/mm$^2$.

Ein wesentlicher Nachteil bei diesem Verfahren ist die erhebliche Umweltbelastung durch die beiden chemischen Behandlungsmittel, so dass dieses Verfahren aus umweltpolitischen Gesichtspunkten nicht mehr lange angewandt werden kann.

Ein weiterentwickeltes Verfahren zur Metallisierung von Polyamiden, das auf dem oben beschriebenen Prinzip des Quellen der Oberfläche des Kunststoffsubstrats beruht aber kein Beizen mit Chromschwefelsäure vorsieht, wird in einem Artikel von G.D. Wolf und F. Fünger "Metallisierte Polyamid-Spritzgußteile", Kunststoffe, 1989, S. 442-447, vorgestellt. Die Oberfläche des amorphen Polyamids wird mit einer metallorganischen Aktivator-Lösung behandelt. Es schließt sich ein herkömmlicher Abscheidungsprozess einer chemisch Nickelschicht an.

Nachteilig an dieser Art der Oberflächenbehandlung, die auf einer chemischen Reaktion der Behandlungslösung mit dem Substrat beruht, ist, dass die gequollenen Oberflächen sehr empfindlich gegen Umwelteinflüsse, wie zum Beispiel Staubeinlagerungen, sind. Des weiteren muss das zu behandelnde Polyamid amorph sein, da teilkristalline oder kristalline Polyamide von der vorgestellten Methode nicht angegriffen werden. Damit stellt diese Methode ein aufwendiges und nur begrenzt einsetzbares Verfahren dar, um haftfeste Verbundschichten zwischen polymeren Substrat und Metallschicht zu erreichen.

Um das Problem des aufwendigen Herstellungsverfahrens bei PVD-Verbundwerkstoffen zu umgehen, hat man Verbundwerkstoffe entwickelt, in denen die metallische Schicht durch thermisches Spritzen auf die Kunststoffoberfläche erzeugt wird. Beim thermischen Spritzen werden metallische Partikel erwärmt und auf das zu beschichtende Substrat beschleunigt.

Aus der US 6 305 459 ist bekannt, Formkerne aus Kunststoff, deren Inneres gekühlt wird, außen durch thermisches Spritzen mit einer metallischen Schicht zu überziehen. Nachteilig bei diesem Verfahren ist, dass nur einfache, rotationssymmetrische Gegenstände mit einer entsprechenden Schicht überzogen werden können. Flächige Gebilde, die keine Rotationsachse aufweisen, können mit diesem Verfahren nicht metallisiert werden, da sich durch die Geometrie bedingt sogenannte Hot-Spots, d.h. lokale Überhitzungen, bilden und aufgrund der verwendeten thermischen Energie das Kunststoffsubstrat schmilzt. Die weiteren, wesentlichen Nachteile bei diesem Verfahren sind, dass die Schichten eine hohe Porösität, hohe Eigenspannung, hohe Schichtstärken und unzureichende Haftung für mechanisch stark belastete Gegenstände aufweisen.

Aufgabe der vorliegenden Erfindung ist die Bereitstellung eines Formwerkzeugs, dessen Oberfläche ganz oder teilweise einen Verbundwerkstoff aus einem Kunststoff und einer Metallschicht aufweist, das die zuvor geschilderten Nachteile des Standes der Technik überwindet und in industriellem Maßstab herstellbar ist.

Die Aufgabe wird erfindungsgemäß gelöst durch die Verwendung eines Gegenstands, dessen Oberfläche ganz oder teilweise einen Verbundwerkstoff aufweist, wobei der Verbundwerkstoff aus einem nichtmetallischen Substrat, enthaltend mindestens ein Polymer, und einer darauf befindlichen außenstromlos abgeschiedenen metallischen Schicht mit einer Haftfestigkeit von mindestens 4 N/mm$^2$ besteht, als Formwerkzeug.

In einer besonders bevorzugten Ausführungsform der vorliegenden Erfindung wird ein Gegenstand als elektronisches Bauteil verwendet, dessen Oberfläche ganz oder teilweise einen Verbundwerkstoff aufweist, wobei dieser Verbundwerkstoff eine erste nichtmetallische Schicht und eine darauf aufgebrachte zweite metallische Schicht aufweist und wobei

a) die Oberfläche des Gegenstands vor Aufbringen der metallischen Schicht nicht chemisch vorbehandelt wird; und

b) die metallische Schicht nicht durch thermisches Spritzen, CVD, PVD oder Laserbehandlung aufgebracht wird.

Unter chemischer Vorbehandlung wird hier und im Folgenden als Abgrenzung zu mechanischen Behandlungen jede Behandlung einer Substratoberfläche verstanden, die durch Beizen, Ätzen, Quellen, Bedampfen, Plasma-Behandlung oder ähnlichen Methoden durchgeführt wird und bei der eine Veränderung der Oberflächen durch eine chemische Reaktion hervorgerufen wird.

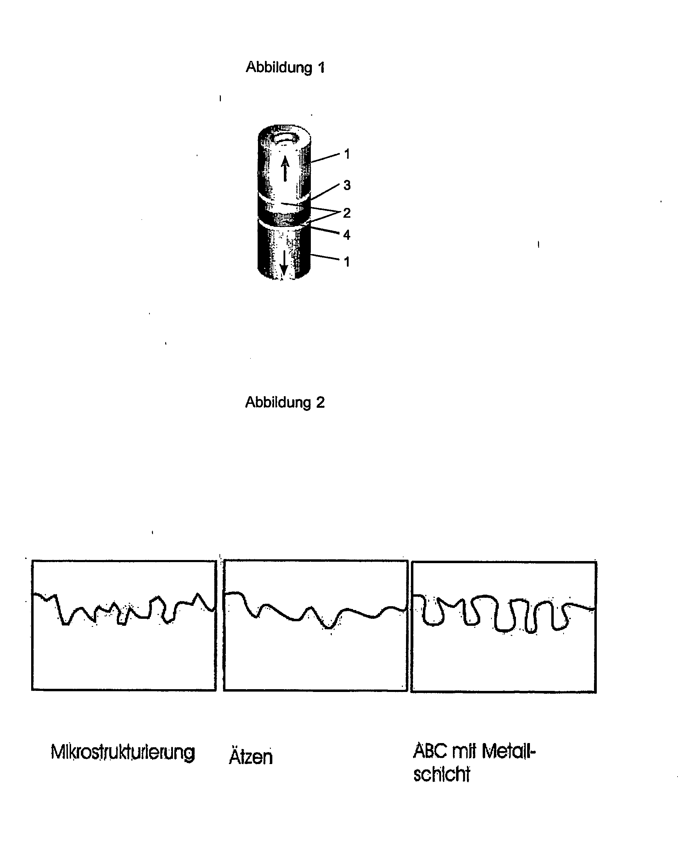

Die verwendeten Gegenstände gemäß der vorliegenden Erfindung weisen im Gegensatz zu den nach chemischer Vorbehandlung metallisierten Gegenständen des Standes der Technik eine rauhe, scharfkantige Grenzschicht zwischen der nichtmetallischen Schicht und der außenstromlos aufgebrachten metallischen Schicht auf. Diese scharfkantigen Ausbuchtungen und Hinterschneidungen der Grenzschicht sind als kantige Oberflächenkonturen beispielsweise in einer Querschliffanalyse deutlich erkennbar, deren Ausführung nachfolgend beschrieben wird. So sind sie von den eher runden, aber jedenfalls abgerundeten, Konturen zu unterscheiden, die durch eine chemische Vorbehandlung, beispielsweise durch Ätzen oder durch Herauslösen einer dazu eingelagerten 2. Phase in einem ABS-Kunststoff, entstehen (Abbildung 2).

Die Haftfestigkeiten (angegeben in N/mm$^2$) der erfindungsgemäßen Verbundwerkstoffe werden ausschließlich anhand des Stirnzugversuchs nach DIN 50160 bestimmt:

Der Stirnzugversuch (senkrechter Zugtest) nach DIN 50160 wird seit Jahren zur Prüfung von Halbleitern, der Bestimmung der Haft-Zugfestigkeit thermisch gespritzter Schichten und bei verschiedenen Beschichtungstechnologien eingesetzt.

Für die Bestimmung der Haftfestigkeit im Stirnzugversuch wird der zu prüfende Schicht/Substrat-Verbund zwischen zwei Prüfstempeln verklebt und unter einachsiger zügiger Kraft bis zum Bruch belastet (vgl. Abbildung 1). Ist die Haftfähigkeit des Klebstoffs größer als die der Beschichtung und erfolgt der Bruch zwischen Schicht und Substrat, so kann nach Gleichung

$$\sigma_{H\,exp} = \frac{F_{max}}{A_G}$$

(mit $\sigma_{H\,exp}$: experimentell erfassbare Haftfestigkeit, $F_{max}$: Maximalkraft beim Bruch des Verbundes und $A_G$: geometrische Bruchfläche) die Haftfestigkeit berechnet werden.

In einer bevorzugten Ausführungsform weist die Standardabweichung der Haftfestigkeit an sechs verschiedenen, über die Oberfläche des Verbundwerkstoffes verteilten Messwerte von höchstens 25 % des arithmetischen Mittelwerts auf.

Die angegebene Gleichmäßigkeit der Haftfestigkeit ermöglicht die erfindungsgemäße Verwendung von Gegenständen mit einem Verbundwerkstoff als Formwerkzeuge in besonderer Weise.

So können sowohl mechanisch als auch thermisch hoch belastbare Werkzeuge in verschiedensten Formen, beispielsweise mit komplexen Oberflächenverläufen, hergestellt werden.

Gemäß einer weiteren bevorzugten Ausführungsform wird ein Gegenstand verwendet, dessen Verbundwerkstoff ein nichtmetallisches Substrat aufweist, das zugleich die Oberfläche des Gegenstands ist. Bevorzugt basieren diese Oberflächen auf einem polymeren Werkstoff. Als besonders bevorzugt sind faserverstärkte Kunststoffe, Thermoplaste und andere, industriell verwendete Polymere zu nennen.

Gleichermaßen ist es aber auch möglich, Gegenstände zu verwenden, deren nichtmetallisches Substrat nicht die Oberfläche des Gegenstands ist. So kann der verwendete Gegenstand aus einem metallischen oder keramischen Werkstoff bestehen, der mit einem nichtmetallischen Substrat überzogen ist, das mindestens ein Polymer enthält.

In einer weiteren Ausführungsform der vorliegenden Erfindung wird ein Gegenstand mit einem Verbundwerkstoff als Formwerkzeug verwendet, der eine zwischen nichtmetallischem Substrat und metallischer Schicht befindliche Grenze aufweist mit einer Rauhigkeit, deren $R_z$-Wert 35 μm nicht übersteigt.

Der $R_z$-Wert ist ein Maß für die durchschnittliche vertikale Oberflächenzerklüftung.

Gemäß einer besonders bevorzugten Ausführungsform der vorliegenden Erfindung werden Gegenstände mit einem Verbundwerkstoff als Formwerkzeuge verwendet, die eine zwischen nichtmetallischem Substrat und metallischer Schicht befindliche Grenze aufweist mit einer Rauhigkeit, ausgedrückt durch einen $R_a$-Wert von höchstens 5 μm.

Der $R_a$-Wert ist ein messtechnisch reproduzierbares Maß für die Rauhigkeit von Oberflächen, wobei Profil-Ausreißer (d.h. extreme Täler oder Hügel) durch die Flächenintegration weitgehend unberücksichtigt bleiben.

Zur Bestimmung Rauhigkeitswerte $R_a$ und $R_z$ wird aus einem erfindungsgemäßen Gegenstand eine Probe entnommen und es wird ein Querschliff gemäß der nachfolgend angeführten Methode angefertigt.

Bei der Querschliffanfertigung besteht die besondere Schwierigkeit, dass die Grenzfläche zwischen Substrat und Oberfläche durch die Bearbeitung sehr schnell zerstört oder abgelöst werden kann. Um dies zu vermeiden, wird bei jeder Querschliffanfertigung eine neue Trennscheibe der Firma Struer Typ 33TRE DSA Nr. 2493 verwendet. Darüber hinaus muss darauf geachtet werden, dass der Anpressdruck, der von der Trennscheibe auf die Substratbeschichtung übertragen wird, so gerichtet ist, dass die Kraft von der Beschichtung aus in Richtung Substrat verläuft. Bei der Trennung ist darauf zu achten, dass der Anpressdruck so gering wie möglich gehalten wird.

Die zu untersuchende Probe wird in eine transparente Einbettmasse (Epofixkitt, erhältlich von der Firma Struer) gegeben. Die eingebettete Probe wird an einer Tischschleifmaschine der Firma Struer, Typ KNUTH-ROTOR-2 geschliffen. Dabei werden verschiedene Schleifpapiere mit Siliziumcarbid und unterschiedlichen Körnungen verwendet. Die genaue Reihenfolge ist wie folgt:

|  | Körnung | Zeit |
|---|---|---|
| 1. Schleifbehandlung | P800 | ca. 1 min |
| 2. Schleifbehandlung | P1200 | ca. 1 min |
| 3. Schleifbehandlung | P2400 | ca. 30 sec |
| 4. Schleifbehandlung | P 4000 | ca. 30 sec |

Während des Schleifvorgangs wird Wasser eingesetzt, um die Schleifpartikel abzutransportieren. Die Tangentialkraft, die am Querschnitt auftritt und durch Reibung entsteht, wird so gerichtet, dass die metallische Schicht gegen das nichtmetallische Substrat gedrückt wird. So wird wirksam verhindert, dass sich die metallische Schicht sich beim Schleifvorgang von dem nichtmetallischen Substrat ablöst.

Anschließend wird die so behandelte Probe mit einem motorbetriebenen Präparationsgerät des Typs DAP-A der Firma Struer poliert. Dabei wird nicht der übliche Probenbeweger verwendet, vielmehr wird die Probe ausschließlich von Hand poliert. Je nach zu polierendem Substrat wird eine Drehzahl zwischen 40 bis 60 U/min und eine Anpresskraft zwischen 5 und 10 N angewandt.

Der Querschliff wird anschließend einer REM-Aufnahme unterzogen. Für die Bestimmung der Grenzlinienvergrößerung wird die Grenzlinie der Schicht zwischen nichtmetallischem Substrat und metallischer Oberfläche bei 10.000-facher Vergrößerung bestimmt. Zur Auswertung wird das Programm OPTIMAS der Firma Wilhelm Mikroelektronik verwendet. Als Ergebnis werden X-Y-Wertepaare ermittelt, die die Grenzlinie zwischen Substrat und Schicht beschreiben. Zur Bestimmung der Grenzlinienvergrößerung im Sinne der vorliegenden Erfindung ist eine Strecke von mindestens 100 μm erforderlich, Dabei ist der Verlauf der Grenzlinie mit mindestens 10 Messpunkten pro μm zu bestimmen. Die Grenzlinienvergrößerung bestimmt sich aus dem Quotienten von wahrer Länge durch geometrische Länge. Die geometrische Länge entspricht dem Abstand der Messstrecke, das heißt zwischen dem ersten und letzten Messpunkt. Die wahre Länge ist die Länge der Linie, die durch alle aufgenommenen Messpunkte verläuft.

Der Oberflächenrauheitswert $R_a$ bestimmt sich nach der Norm DIN 4768 / ISO 4287/1 ebenfalls unter der Verwendung der zuvor aufgenommenen X-Y-Wertepaare.

Gemäß einer weiteren, ebenfalls bevorzugten Ausführungsform der vorliegenden Erfindung enthält das nichtmetallische Substrat mindestens ein faserverstärktes Polymer, insbesondere ein Kohlenstofffaser verstärktes Polymer, und der Durchmesser der Faser beträgt weniger als 10 μm.

Darüber hinaus kann das nichtmetallische Substrat in einer weiteren Form der vorliegenden Erfindung mindestens ein faserverstärktes Polymer enthalten, insbesondere ein Glasfaser verstärktes Polymer, wobei der Durchmesser der Faser mehr als 10 μm beträgt.

Sofern die Verbundwerkstoffe nicht nur thermischen Beanspruchungen unterliegen sondern auch mechanischen werden besonders bevorzugt verstärkte Kunststoffe eingesetzt, insbesondere Kohlenstofffaser verstärkte Kunststoffe (CFK), Glasfaser verstärkte Kunststoffe (GFK), auch durch Aramitfasern verstärkte Kunststoffe oder Mineralfaser verstärkte Kunststoffe. Mit der Verwendung dieser Gegenstände wird eine hohe Steifigkeit der resultierenden Bauteile bei geringem Gewicht erzielt, die aufgrund Ihrer geringen Kosten für den Industriellen Einsatz besonders interessant sind. Insbesondere Glasfaser verstärkte Polymere als Bestandteil des nichtmetallischen Substrates, die Fasern mit einem Durchmesser größer als 10 μm aufweisen, sind sehr preiswert und gut zu verarbeiten. Der Faserdurchmesser hat einen großen Einfluss auf die Rauhigkeitswerte, so dass bei solchen Werkstoffen gemäß der vorliegenden Erfindung ein Rauhigkeitswert $R_a$ von höchstens 10 μm erzielt wird. Gleichzeitig ist es erfindungsgemäß möglich, ausgezeichnete Werte für die Haftfestigkeit zu erzielen. Darüber hinaus weisen die erfindungsgemäß verwendeten Gegenstände eine hohe Gleichmäßigkeit der Haftung auf. Dies ermöglicht erstmals, die Lebensdauer für das Formwerkzeug deutlich zu erhöhen. Denn bereits eine lokale Delamination des Schichtenverbundes führt zu einem Versagen des gesamten Formwerkzeugs. Besonders gravierend ist der Vorteil bei Formwerkzeugen mit einer durch den Schichtverbund bedeckten Oberfläche von mehr als 10 dm$^2$, also bei großen Bauteilen bzw. Formwerkzeugen mit einer großen Oberfläche.

In einer weiteren Ausführungsform weist der vorstehend beschriebene Gegenstand eine Grenze zwischen nichtmetallischem Substrat und metallischer Schicht auf, die eine Rauhigkeit mit einem $R_z$-Wert von höchstens 100 μm aufweist.

Gerade für den Einsatz von faserverstärkten Polymeren, deren Faserstärke mehr als 10 μm beträgt, ist es wichtig, möglichst geringe $R_z$-Werte zu erzielen. Bei dieser Kombination ist es überraschenderweise möglich, hohe Haftfestigkeiten bei - im Verhältnis den verwendeten großen Faserdurchmessern - geringen $R_z$-Werten zu erzielen.

Das Polymer des nichtmetallischen Substrats ist in einer bevorzugten Ausführungsform der Erfindung ausgewählt aus der Gruppe von Polyamid, Polyvinylchlorid, Polystyrol, Epoxidharzen, Polyetheretherketon, Polyoxymethylen, Polyformaldehyd, Polyacetal, Polyurethan, Polyetherimid, Polyphenylsulfon, Polyphenylensulfid, Polyarylamid, Polycarbonat und Polyimid.

Bei dieser Ausführungsform kann die metallische Schicht eine Haftfestigkeit von mindestens 12 N/mm$^2$ aufweisen.

Gleichermaßen kann das Polymer des nichtmetallischen Substrats in einer anderen Ausführungsform der vorliegenden Erfindung aber auch ausgewählt sein aus Polypropylen oder Polytetrafluorethylen.

In den Fällen, in denen die nichtmetallische Schicht entweder Polypropylen und/oder Polytetrafluorethylen enthält, werden Haftfestigkeiten von mindestens 4 N/mm$^2$ erzielt. Dies stellt einen ausgezeichneten Wert dar, insbesondere in Verbindung mit der hohen Gleichmäßigkeit der Haftfestigkeit, die bisher nicht erzielt werden konnte.

Besonders bevorzugt sind erfindungsgemäße Ausführungsformen, die eine Standardabweichung der Haftfestigkeit sechs verschiedener, über die Oberfläche des Schichtverbundes verteilten Messwerte von höchstens 25 %, insbesondere höchstens 15 %, des arithmetischen Mittelwerts aufweisen.

Auf diese Weise ist eine noch höhere mechanische Beanspruchbarkeit der resultierenden Formwerkzeuge gewährleistet.

Gemäß einer weiteren, ebenfalls bevorzugten Ausführungsform der vorliegenden Erfindung ist die außenstromlos abgeschiedene Metallschicht eine Metalllegierung oder Metalldispersionsschicht.

Auf diese Weisen können erstmals Gegenstände mit einem Verbundwerkstoff als Formwerkzeuge werden, die eine ausgezeichnete Haftung der metallischen Schicht auf dem nichtmetallischen Substrat aufweisen. Auch die Gleichmäßigkeit der Haftung der metallischen Schicht spielt eine wesentliche Rolle für die Eignung dieser Gegenstände als stark beanspruchte Bauteile. Eine gezielte Auswahl des nichtmetallischen Substrates und der darauf befindlichen metallischen Schicht ermöglicht eine exakte Anpassung des Eigenschaftsprofils an die Bedingungen des Einsatzgebietes.

Besonders bevorzugt wird auf das nichtmetallische Substrat des erfindungsgemäß verwendeten Gegenstands als außenstromlos abgeschiedene Metallschicht eine Kupfer-, Nickel- oder Goldschicht aufgebracht.

Es kann aber auch eine außenstromlos abgeschiedene Metalllegierung oder Metalldispersionsschicht aufgebracht werden, bevorzugt eine Kupfer-, Nickel- oder Goldschicht mit eingelagerten nichtmetallischen Partikeln. Dabei können die nichtmetallischen Partikel eine Härte von mehr als 1.500 HV aufweisen und ausgewählt sein aus der Gruppe von Siliziumcarbid, Korund, Diamant und Tetraborcarbid.

Diese Dispersionsschichten weisen somit neben den zuvor beschriebenen Eigenschaften weitere Funktionen auf, beispielsweise kann die Verschleißbeständigkeit oder Oberflächenbenetzung der verwendeten Gegenstände verbessert werden.

Ebenfalls bevorzugt können die nichtmetallischen Partikel reibungsvermindernde Eigenschaften aufweisen und ausgewählt sein aus der Gruppe von Polytetrafluorethylen, Molybdänsulfid, kubisches Bornitrid und Zinnsulfid.

Die Gegenstände der vorliegenden Erfindung werden besonders bevorzugt mit Hilfe eines speziellen Verfahrens erhalten, das die folgenden Schritte umfasst:

 i. die Oberfläche der nichtmetallischen Schicht wird vor Aufbringen der metallischen Schicht nicht chemisch vorbehandelt;

 ii. die Oberfläche der nichtmetallischen Schicht wird in einem ersten Schritt mittels eines Strahlmittels mikrostrukturiert;

 iii. die metallische Schicht wird anschließend durch außenstromlose Metallabscheidung aufgebracht.

Die als Formwerkzeuge zu verwendenden Gegenstände gemäß der vorliegenden Erfindung weisen als Verbundwerkstoff zunächst ein nichtmetallisches Substrat auf, das mindestens ein Polymer enthält. Zur Herstellung des Verbundwerkstoffes gemäß der Erfindung wird die Oberfläche des nichtmetallischen Substrates in einem ersten Schritt mittels einer Strahlbehandlung mikrostrukturiert. Das verwendete Verfahren ist zum Beispiel in der DE 197 29 891 A1 beschrieben. Als Strahlmittel werden besonders verschleißbeständige, anorganische Partikel verwendet. Bevorzugt handelt es um Kupfer-Aluminiumoxid oder Siliziumcarbid. Dabei hat es sich als vorteilhaft erwiesen, dass das Strahlmittel eine Partikelgröße zwischen 30 und 300 $\mu$m aufweist. Dort ist weiterhin beschrieben, dass auf die so aufgerauhten Oberflächen eine Metallschicht aufgebracht werden kann mittels einer außenstromlosen Metallabscheidung.

Wie bereits die Verfahrensbezeichnung aussagt, wird bei der außenstromlosen Metallabscheidung während des Beschichtungsprozesses keine elektrische Energie von außen zugeführt sondern die Metallschicht wird ausschließlich durch eine chemische Relation abgeschieden. Die Metallisierung von nichtleitenden Kunststoffen in einer chemisch reduktiv arbeitenden Metallsalzlösung benötigt einen Katalysator an der Oberfläche, um an diesem das metastabile Gleichgewicht des Metallreduktionsbades zu stören und an der Oberfläche des Katalysators Metall abzuscheiden. Dieser Katalysator besteht aus Edelmetallkeimen wie Palladium, Silber, Gold und vereinzelt Kupfer, die auf der Kunststoffoberfläche aus einem Aktivatorbad angelagert werden. Bevorzugt wird, verfahrenstechnisch begründet, jedoch eine Aktivierung mit Palladiumkeimen.

Im wesentlichen erfolgt die Aktivierung der Substratoberfläche in zwei Schritten. In einem ersten Schritt wird das Bauteil in eine kolloidale Lösung (Aktivatorbad) eingetaucht. Dabei werden die für eine Metallisierung notwendigen, bereits in der Aktivatorlösung vorhandenen Palladiumkeime an der Kunststoffoberfläche adsorbiert. Nach der Bekeimung wird durch Spülen in einer alkalischen, wäßrigen Lösung (Konditionierung) das sich beim Eintauchen In die kolloidalen Lösung zusätzlich gebildete Zinn-II- bzw. Zinn-IV-Oxidhydrat aufgelöst und dadurch der Palladiumkeim freigelegt. Nach dem Spülen kann mit chemischen Reduktionsbädern vernickelt oder verkupfert werden.

Dies erfolgt in einem durch einen Stabilisator im metastabilen Gleichgewicht gehaltenen Bad, welches sowohl das Metallsalz als auch das Reduktionsmittel enthält. Die Bäder für die Nickel- bzw. Kupferabscheidung haben die Eigenschaft, die in ihnen gelösten Metallionen an den Keimen zu reduzieren und elementares Nickel oder Kupfer abzuscheiden. Im Beschichtungsbad müssen sich die beiden Reaktionspartner den Edelmetallkeimen an der Kunststoffoberfläche nähern. Durch die hierdurch stattfindende Redoxreaktion entsteht die Leitschicht, wobei die Edelmetallkeime dabei die Elektronen des Reduktionsmittels aufnehmen und sie bei Annäherung eines Metallions wieder abgeben. Bei dieser Reaktion wird Wasserstoff freigesetzt. Nachdem die Palladiumkeime mit Nickel bzw. Kupfer überzogen wurden, übernimmt die aufgebrachte Schicht die katalytische Wirkung. Dies bedeutet; dass die Schicht von den Palladiumkeimen aus zusammenwächst, bis sie völlig geschlossen ist.

Exemplarisch wird an dieser Stelle auf die Abscheidung von Nickel eingegangen. Beim Beschichten mit Nickel wird die bekeimte und konditionierte Kunststoffoberfläche in ein Nickelmetallsalzbad eingetaucht, welches in einem Temperaturbereich zwischen 82°C und 94°C eine chemische Reaktion zulässt. Der Elektrolyt ist im allgemeinen eine schwache Säure mit einem pH-Wert, der zwischen 4,4 und 4,9 liegt.

Die aufgebrachten dünnen Nickelüberzüge können mit einer elektrolytisch abgeschiedenen Metallschicht verstärkt werden. Eine Beschichtung von Bauteilen mit Schichtendicken >25 $\mu$m ist aufgrund der niedrigen Abscheidungsgeschwindigkeit chemischer Beschichtungsprozesse nicht wirtschaftlich. Weiterhin können mit den chemischen Beschichtungsprozessen nur wenige Beschichtungswerkstoffe abgeschieden werden, so dass es vorteilhaft ist, für weitere technisch wichtige Schichtwerkstoffe auf elektrolytische Verfahren zurückzugreifen. Ein weiterer wesentlicher Punkt sind die unterschiedlichen Eigenschaften chemisch und elektrolytisch abgeschiedener Schichten bei Schichtstärken > 25 $\mu$m, beispielsweise Einebnung, Härte und Glanz. Die Grundlagen der elektrolytischen Metallabscheidung sind In B. Gaida, "Einführung In die Galvanotechnik", E.G. Leuze-Verlag, Saulgau, 1988 oder in H. Simon, M. Thoma, "Angewandte Oberflächentechnik für metallische Werkstoffe", C. Hanser-Verlag, München (1985) beschrieben.

Kunststoffteile, die durch einen außenstromlosen Beschichtungsprozess eine elektrisch leitende Schicht aufweisen, unterscheiden sich hinsichtlich der elektrolytischen Metallisierung nur unwesentlich von denen der Metalle. Trotzdem sollten einige Punkte bei der elektrolytischen Metallisierung von metallisierten Kunststoffen nicht außer acht gelassen werden. Aufgrund der meist geringen Leitschichtstärke muss die Stromdichte zu Beginn der elektrolytischen Abscheidung reduziert werden. Wird dieser Punkt nicht beachtet, kann es zum Ablösen und zum Verbrennen der Leitschicht kommen. Ferner sollte darauf geachtet werden, dass störende Anlaufschichten mit speziell dafür geeigneten Dekapierbädern entfernt werden. Weiterhin können Eigenspannungen zum Zerstören der Schicht führen. Bei der Abscheidung von Nickelschichten aus einem ammoniakalischen Bad können beispielsweise Zugspannungen in der Größenordnung von 400 bis 500 MPa auftreten. Durch Zusätze, wie Saccharin und Butindiol, kann eine Veränderung der Struktur der Nickelüberzüge in Form einer veränderten Korngröße und Bildung von Mikrodeformationen den Abbau von inneren Spannungen begünstigen, was sich auf ein mögliches vorzeitiges Versagen bei der Beschichtung positiv auswirken kann.

Beispiele für außenstromlos aufgebrachte Metallschichten sind in dem Handbuch der Firma AHC Oberflächentechnik ausführlich beschrieben ("Die AHC-Oberfläche" Handbuch für Konstruktion und Fertigung, 4. Auflage, 1999).

Auf der metallischen Schicht können noch eine oder mehrere Schichten, insbesondere metallische, keramische sowie vernetzte oder gehärtete Polymerschichten angeordnet sein.

So ist es zum Beispiel möglich, auf einer außenstromlos abgeschiedenen Nickelschicht als metallische Schicht der vorliegenden Erfindung eine weitere, elektrolytisch abgeschiedene Nickelschicht aufzubringen und darauf eine Chromschicht abzuscheiden. Die elektrolytische Abscheidung der zweiten Nickelschicht wird vorgenommen, um größere Schichtdicken kostengünstig herstellen zu können.

Auch können die gemäß der vorliegenden Erfindung verwendeten Gegenstände eine Nickelschicht als metallische Schicht aufweisen, auf die eine weitere Nickelschicht aufgebracht wird. Auf diese Weise ist es möglich, eine hohe Steifigkeit der resultierenden Kunststoffteile zu erreichen und so eine Anwendung für mechanisch stark beanspruchte Komponenten zu gewährleisten.

Des weiteren können metallische Schichten nicht nur elektrolytisch sondern auch mit Hilfe anderer Verfahren wie CVD/PVD oder thermischem Spritzen auf einen Gegenstand mit einer metallischen Schicht der vorliegenden Erfindung aufgebracht werden.

Auf diese Weise ist es möglich, Aluminium oder Edelstahl auf einen Gegenstand aufzubringen, der zum Beispiel aus Kunststoff besteht und mit einer Nickelschicht gemäß der vorliegenden Erfindung versehen ist.

In einer weiteren Ausführungsform der vorliegenden Erfindung ist auf der außenstromlos abgeschiedenen metallischen Schicht des erfindungsgemäß verwendeten Gegenstands eine Schicht aus Aluminium, Titan oder deren Legierungen aufgebracht, deren Oberfläche anodisch oxidiert oder keramisiert ist.

Solche auf anodischem Wege oxidierten oder keramisierten Schichten aus Aluminium, Titan oder deren Legierungen sind auf metallischen Gegenständen bekannt und werden beispielsweise unter der Bezeichnung Hart-Coat® oder Kepla-Coat® von der Firma AHC Oberflächentechnik GmbH & Co. OHG vertrieben. Diese Schichten zeichnen sich durch eine besonders hohe Härte und einen hohen Betriebswiderstand und über mechanischen Beanspruchungen.

Zwischen der außenstromlos abgeschiedenen metallischen Schicht des erfindungsgemäß verwendeten Gegenstands und der Schicht aus Aluminium, Titan oder deren Legierungen können noch eine oder mehrere weitere metallische Schichten angeordnet sein.

Die weiteren, zwischen der stromlos abgeschiedenen Schicht und der Aluminiumschicht angeordneten metallischen Schichten sind je nach Einsatzzweck ausgewählt. Auswahl solcher Zwischenschichten ist dem Fachmann gut bekannt und beispielsweise in dem Buch "Die AHC-Oberfläche - Handbuch für Konstruktion und Fertigung" 4. erweiterte Auflage 1999 beschrieben.

Ebenso ist es möglich, dass die Oberfläche eines solchen Gegenstands eine durch Fremdioneneinlagerung schwarz gefärbte, keramische Oxidschicht aus Aluminium, Titan oder deren Legierungen ist.

Die durch Fremdionen schwarz gefärbte keramische Oxidschicht aus Aluminium, Titan oder deren Legierungen ist für hochwertige optische Elemente von besonderem Interesse, insbesondere in der Luft- und Raumfahrtindustrie.

Die Herstellung von durch Fremdioneneinlagerung schwarz gefärbten keramischen Oxidschichten ist beispielsweise in der US-A-5035781 oder US-A-5075178 beschrieben. Die Erzeugung von Oxidkeramikschichten auf Aluminium oder Titan ist beispielsweise in der EP 0 545 230 B1 beschrieben. Die Herstellung von anodisch erzeugten Oxidschichten auf Aluminium ist beispielsweise in der EP 0 112 439 B1 beschrieben.

Insgesamt zeigen die oben angeführten Beispiele, dass die erfindungsgemäßen Gegenstände in einem sehr großen Bereich technischer Anwendungen eingesetzt werden können.

Ein Gegenstand gemäß der vorliegenden Erfindung kann beispielsweise als Stanz-, Gieß- oder Umformwerkzeug verwendet werden.

**Beispiel (erfindungsgemäß)**

Eine Platte aus Polyamid-6 mit den Abmessungen 200 * 100 * 12 mm mit einer Ausgangsrauhigkeit von $R_a$ = 0,64 $\mu$m und $R_z$ = 7,5 $\mu$m wurde oberflächenbehandelt:

Die Oberflächenvorbehandlung wird mit einer modifizierten Druckstrahlanlage der Fa. Straaltechnik International vorgepommen. Die Strahlanlage wird mit einem Druck von 4 bar betrieben. Als Strahldüse wird eine Borcarbiddüse mit einem Durchmesser von 8 mm eingesetzt. Die Strahldauer beträgt 4,6 s. Als Strahlmittel wird SiC der Körnung P80 mit einem mittleren Korndurchmesser von 200 bis 300 $\mu$m verwendet.

Um das Strahlsystem speziell an die Anforderungen der Kunststoffmodifikation hinsichtlich reproduzierbarer Oberflächentopographien anzupassen, wurden 2 Druckkreisläufe installiert, je einer für den Transport des Strahlmittels und den eigentlichen Beschleunigungsvorgang. Diese Modifikation ergab einen sehr konstanten Volumenstrom und einen großen Druckbereich.

Ein Druckluftstrom transportiert das Strahlmittel mit einem möglichst geringen Druck zur Düse. Die Strömungsverhältnisse gewährleisten, verursacht durch einen hohen Volumenstrom des Strahlmittels und einen geringen Anteil an Druckluft, einen geringen Verschleiß der Anlage und des Strahlmittels. Erst am Ende des Transportschlauches vor der Mischdüse wird der Querschnitt reduziert, um den gewünschten Volumenstrom einzustellen. Bei allen Kunststoffvorbehandlungen wurde ein konstanter Volumenstrom von 1 l/min vorgegeben. Im zweiten Teil des Systems strömt bis zur Düse Druckluft (Volumenstrom 1), die sich in einem Druckbereich von 0,2-7 bar stufenlos einstellen lässt. Das Strahlmittel, welches mit einer sehr kleinen Strömungsgeschwindigkeit in die Mischdüse gefördert wird, wird dann durch die hohe Strömungsgeschwindigkeit des Druckluftstroms beschleunigt.

Die so aufgerauhte Platte wir in ein Ultraschallbad mit einem Gemisch aus entionisiertem Wasser und 3 Vol.-% Butylglykol fünf Minuten lang behandelt.

Die für die Metallabscheidung der Leitschicht verwendeten Badreihen basieren auf der bekannten kolloidalen Palladiumaktivierung in Verbindung mit einer abschließenden katalysierten Metallreduktion. Alle hierfür benötigten Badreihen wurden von der Fa. Max Schlötter bezogen. Die vom Hersteller angegeben Tauchreihenfolgen, Behandlungszeiten und -temperaturen wurden bei allen Prozeßschritten der Nickelabscheidung eingehalten:

(1) Aktivatorvortauchlösung:

Dient zur Vermeidung der Einschleppung von Verunreinigungen und zur vollständigen Benetzung der Probe vor dem eigentlichen Aktivieren der Oberfläche.
Tauchzeit: 2 min, Raumtemperatur

(2) Aktivator GS 510:

Aktivierung der Oberfläche mit Zinn/Palladium-Kolloid.
Tauchzeit: 4 min, Raumtemperatur

(3) Spülbäder: entionisiertes Wasser
Vermeidung der Einschleppung von Aktivator GS 510-Bestandteilen durch Spülen in entionisiertem Wasser.
Tauchzeit: 1 min, Raumtemperatur

(4) Conditioner 101:

Konditionierung der Werkstoffoberfläche durch Ablösen störender Zinnverbindungen von der Oberfläche.
Tauchzeit: 6 min, Raumtemperatur

(5) Spülbäder: entionisiertes Wasser.
Tauchzeit: 1 min, Raumtemperatur

(6a) Chemisches Nickelbad SH 490 LS:

Metallisieren der Kunststoffe mit einer hellen, halbglänzenden amorphen Schicht bei einer Abscheidetemperatur von 88-92°C.
Tauchzeit: 10 min

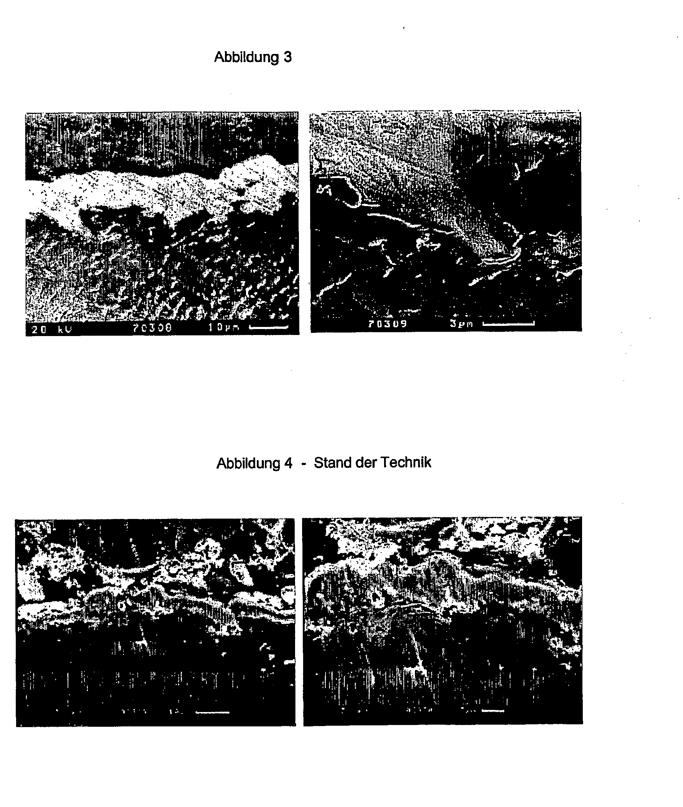

Bei der gewählten Tauchzeit im Nickelbad ergab sich eine Schichtstärke von 1,4 μm. Diese Stärke der Nickelschicht reicht für eine elektrolytische Beschichtung aus.
Sämtliche Prozeßschritte, die zur Abscheidung der Leitschicht nötig waren, erfolgten in 50 l fassenden Kunststoffwannen, wobei bei der Nickelabscheidung durch eine zusätzliche Heiz platte mit Temperaturregelung eine Badtemperatur von 90° ± 0,5°C während des gesamten Beschichtungszyklus eingehalten wurde. Um eine gleichmäßige und reproduzierbare Schichtqualität zu erhalten, wurden die Badreihen nach einem Durchsatz von 20 Proben nach Angaben der Fa. Max Schlötter analysiert und ergänzt.
Nachdem die Nickelleitschicht chemisch aufgebracht war, wurden die Probe von ca. 90°C auf ca. 60°C in destilliertem Wasser abgekühlt, um dann bei 55°C elektrolytisch mit Nickel weiterbeschichtet zu werden. Dieser Zwischenschritt diente dazu, das Entstehen von Reaktionsschichten zu vermeiden und durch rasches Abkühlen hervorgerufene Eigenspannungen auszuschließen. Die Proben, die ausschließlich mit einer Nickelleitschicht beschichtet wurden, kühlten in einem destillierten Wasserbad langsam bis auf 25°C ab.
Die Querschliffuntersuchung durch REM (1.500-fach und 3.000-fach) sind in den folgenden Abbildungen (Abbildung 3) wiedergegeben.
Die Ergebnisse der Haftfestigkeitsuntersuchungen sind in Tabelle 1 dargestellt.

**Tabelle 1**

| Nr. | Haftfestigkeit |
|---|---|
| 1 | 20,5 N/mm$^2$ |
| 2 | 19,5 N/mm$^2$ |
| 3 | 13,4 N/mm$^2$ |
| 4 | 16,4 N/mm$^2$ |
| 5 | 22,3 N/mm$^2$ |
| 6 | 20,3 N/mm$^2$ |
| 7 | 16,8 N/mm$^2$ |
| 8 | 14,5 N/mm$^2$ |
| 9 | 13,2 N/mm$^2$ |
| 10 | 12,9 N/mmz |
| 11 | 16,7 N/mm$^2$ |
| 12 | 24,5 N/mm$^2$ |
| 13 | 18,4 N/mm$^2$ |
| 14 | 19,2 N/mm$^2$ |
| 15 | 15,4 N/mm$^2$ |
| 16 | 22,9 N/mm$^2$ |
| 17 | 16,7 N/mm$^2$ |
| 18 | 17,3 N/mm$^2$ |
| 19 | 12,8 N/mm$^2$ |
| 20 | 14,5 N/mm$^2$ |
| 21 | 18,2 N/mm$^2$ |
| 22 | 19,7 N/mm$^2$ |
| 23 | 23,4 N/mm$^2$ |

(fortgesetzt)

| Nr. | Haftfestigkeit |
|---|---|
| 24 | 18,9 N/mm$^2$ |
| 25 | 20,1 N/mm$^2$ |
| 26 | 21,4 N/mm$^2$ |
| | |
| Standardabweichung | 3,4 N/mm$^2$ |
| Mittelwert | 18,1 N/mm$^2$ |
| Variationskoeffizient | 19 % |

**Vergleichsbeispiel (nicht erfindungsgemäß)**

Das erfindungsgemäße Beispiel wird wiederholt, jedoch wird nach der Strahlbehandlung die Platte in einem Ultraschallbad in einer Suspension von 5 Gew.-% CaCO$_3$ in 96% Ethanol 5 Minuten lang behandelt.
Anschließend wird die Platte in einem weiteren Ultraschallbad mit reinen, 96-%igem Ethanol für weitere fünf Minuten lang behandelt.
Die Querschliffuntersuchung durch REM (1.500-fach und 3.000-fach) sind in den folgenden Abbildungen (Abbildung 4) wiedergegeben.
Die Auswertung der EDX-Analyse ergab eine Restmenge an Calcium von 0,91 Gew.-%, die aus der Behandlung der CaCO$_3$/ Ethanol-Suspension stammt.
Die Ergebnisse der Haftfestigkeitsuntersuchungen sind in Tabelle 2 dargestellt.

**Tabelle 2**

| Nr. | Haftfestigkeit |
|---|---|
| 1 | 9,9 N/mm$^2$ |
| 2 | 19,1 N/mm$^2$ |
| 3 | 10,1 N/mm$^2$ |
| 4 | 13,1 N/mm$^2$ |
| 5 | 16,6 N/mm$^2$ |
| 6 | 10,3 N/mm$^2$ |
| 7 | 19,8 N/mm$^2$ |
| 8 | 13,3 N/mm$^2$ |
| 9 | 21,4 N/mm$^2$ |
| 10 | 10,9 N/mm$^2$ |
| 11 | 20,0 N/mm$^2$ |
| 12 | 10,9 N/mm$^2$ |
| 13 | 11,7 N/mm$^2$ |
| 14 | 13,0 N/mm$^2$ |
| 15 | 16,4 N/mm$^2$ |
| 16 | 14,1 N/mm$^2$ |
| 17 | 15,4 N/mm$^2$ |
| 18 | 10,5 N/mm$^2$ |
| 19 | 15,8 N/mm$^2$ |
| 20 | 16,7 N/mm$^2$ |

(fortgesetzt)

| Nr. | Haftfestigkeit |
|---|---|
| 21 | $8,5 \text{ N/mm}^2$ |
| 22 | $17,2 \text{ N/mm}^2$ |
| 23 | $7,0 \text{ N/mm}^2$ |
| 24 | $18,2 \text{ N/mm}^2$ |
| 25 | $7,2 \text{ N/mm}^2$ |
| 26 | $19,4 \text{ N/mm}^2$ |
| | |
| Standardabweichung | $4,2 \text{ N/mm}^2$ |
| Mittelwert | $14,1 \text{ N/mm}^2$ |
| Variationskoeffizient | 29,8% |

Die Ergebnisse zeigen deutlich einen signifikanten Unterschied in der Standardabweichung der Haftfestigkeit der verschiedenen, über die Oberfläche des Verbundwerkstoffes verteilten Messwerte.
Dieser Unterschied bewirkt beispielsweise bei der Verwendung von Formwerkzeugen eine deutlich höhere Lebensdauer, da keine lokal auftretenden Delaminationen zu beobachten sind.

Bezugszeichenliste Abbildung 1:

(1) Zugstempel
(2) Kleber
(3) Metallschicht
(4) Substrat

**Patentansprüche**

1.  Verwendung eines Gegenstands, dessen Oberfläche ganz oder teilweise einen Verbundwerkstoff aufweist, wobei der Verbundwerkstoff aus einem nichtmetallischen Substrat, enthaltend mindestens ein Polymer, und einer darauf befindlichen außenstromlos abgeschiedenen metallischen Schicht mit einer Haftfestigkeit von mindestens $4 \text{ N/mm}^2$ besteht, als Formwerkzeug.

2.  Verwendung nach Anspruch 1, **dadurch gekennzeichnet, dass** die Standardabweichung der Haftfestigkeit an sechs verschiedenen, über die Oberfläche des Verbundwerkstoffes verteilten Messwerte von höchstens 25 % des arithmetischen Mittelwerts aufweist.

3.  Verwendung nach Anspruch 1 oder 2, **dadurch gekennzeichnet, dass**

    a) die Oberfläche des Gegenstands vor Aufbringen der außenstromlos abgeschiedenen metallischen Schicht nicht chemisch vorbehandelt wird; und
    b) die metallische Schicht nicht durch thermisches Spritzen, CVD, PVD oder Laserbehandlung aufgebracht wird.

4.  Verwendung nach einem der Ansprüche 1 bis 3, **dadurch gekennzeichnet, dass** das nichtmetallische Substrat die Oberfläche des Gegenstands ist.

5.  Verwendung nach Anspruch 1 oder 2, **dadurch gekennzeichnet, dass** das nichtmetallische Substrat nicht die Oberfläche des Gegenstands ist.

6.  Verwendung nach einem der vorhergehenden Ansprüche, **dadurch gekennzeichnet, dass** die zwischen nichtmetallischem Substrat und metallischer Schicht befindliche Grenze eine Rauhigkeit mit einem $R_z$-Wert von höchstens 35 $\mu$m aufweist.

7. Verwendung nach einem der vorhergehenden Ansprüche, **dadurch gekennzeichnet, dass** die zwischen nichtmetallischem Substrat und metallischer Schicht befindliche Grenze eine Rauhigkeit mit einem $R_a$-Wert von höchstens 5 $\mu$m aufweist.

8. Verwendung nach einem der vorhergehenden Ansprüche, **dadurch gekennzeichnet, dass** das nichtmetallische Substrat mindestens ein faserverstärktes Polymer, insbesondere ein Kohlenstofffaser verstärktes Polymer, enthält und der Durchmesser der Faser weniger als 10 $\mu$m beträgt.

9. Verwendung nach einem der Ansprüche 1 bis 5, **dadurch gekennzeichnet, dass** das nichtmetallische Substrat mindestens ein faserverstärktes Polymer, insbesondere ein Glasfaser verstärktes Polymer, enthält und der Durchmesser der Faser mehr als 10 $\mu$m beträgt.

10. Verwendung nach Anspruch 9, **dadurch gekennzeichnet, dass** die zwischen nicht-metallischem Substrat und metallischer Schicht befindliche Grenze eine Rauhigkeit mit einem $R_a$-Wert von höchstens 10 $\mu$m aufweist.

11. Verwendung nach einem der Ansprüche 9 oder 10, **dadurch gekennzeichnet, dass** die zwischen nichtmetallischem Substrat und metallischer Schicht befindliche Grenze eine Rauhigkeit mit einem $R_z$-Wert von höchstens 100 $\mu$m aufweist.

12. Verwendung nach einem der vorhergehenden Ansprüche, **dadurch gekennzeichnet, dass** das Polymer ausgewählt ist aus der Gruppe von Polyamid, Polyvinylchlorid, Polystyrol, Epoxidharzen, Polyetheretherketon, Polyoxymethylen, Polyformaldehyd, Polyacetal, Polyurethan, Polyetherimid, Polyphenylsulfon, Polyphenylensulfid, Polyarylamid, Polycarbonat und Polyimid.

13. Verwendung nach Anspruch 12, **dadurch gekennzeichnet, dass** die metallische Schicht eine Haftfestigkeit von mindestens 12 N/mm$^2$ aufweist.

14. Verwendung nach einem der Ansprüche 1 bis 11, **dadurch gekennzeichnet, dass** das nichtmetallische Substrat Polypropylen oder Polytetrafluorethylen ist.

15. Verwendung nach einem der vorhergehenden Ansprüche, **dadurch gekennzeichnet, dass** die Standardabweichung der Haftfestigkeit höchstens 25 %, insbesondere höchstens 15 %, des arithmetischen Mittelwerts beträgt.

16. Verwendung nach einem der vorhergehenden Ansprüche, **dadurch gekennzeichnet, dass** die außenstromlos abgeschiedene Metallschicht eine Metalllegierung oder Metalldispersionsschicht ist.

17. Verwendung nach einem der vorhergehenden Ansprüche, **dadurch gekennzeichnet, dass** die außenstromlos abgeschiedene Metallschicht eine Kupfer-, Nickel- oder Goldschicht ist.

18. Verwendung nach einem der vorhergehenden Ansprüche, **dadurch gekennzeichnet, dass** die außenstromlos abgeschiedene Metalldispersionsschicht eine Kupfer-, Nickel- oder Goldschicht mit eingelagerten nichtmetallischen Partikeln ist.

19. Verwendung nach Anspruch 18, **dadurch gekennzeichnet, dass** die nichtmetallischen Partikel eine Härte von mehr als 1.500 HV aufweisen und ausgewählt sind aus der Gruppe von Siliziumcarbid, Korund, Diamant und Tetraborcarbid.

20. Verwendung nach Anspruch 18 oder 19, **dadurch gekennzeichnet, dass** die nichtmetallischen Partikel reibungsvermindernde Eigenschaften aufweisen und ausgewählt aus der Gruppe von Polytetrafluorethylen, Molybdänsulfid, kubisches Bornitrid und Zinnsulfid.

21. Verwendung nach einem der vorhergehenden Ansprüche, **dadurch gekennzeichnet, dass** auf der außenstromlos abgeschiedenen metallischen Schicht eine Schicht aus Aluminium, Titan oder deren Legierungen aufgebracht ist, deren Oberfläche anodisch oxidiert oder keramisiert ist.

**22.** Verwendung nach Anspruch 21, **dadurch gekennzeichnet, dass** zwischen der außenstromlos abgeschiedenen metallischen Schicht und der Schicht aus Aluminium, Titan oder deren Legierungen noch eine oder mehrere metallische Schichten angeordnet sind.

**23.** Verwendung nach Anspruch 21 oder 22, **dadurch gekennzeichnet, dass** die Oberfläche des Gegenstands eine durch Fremdioneneinlagerung schwarz gefärbte, keramische Oxidschicht aus Aluminium, Titan oder deren Legierungen ist.

**24.** Verwendung nach einem der vorhergehenden Ansprüche als Stanz-, Gieß- oder Umformwerkzeug.

**Claims**

**1.** Use of an object whose surface exhibits, in full or partially, a composite material the composite material consisting of a non-metallic substrate containing at least one polymer, and of a metallic layer present thereon and deposited without external electric current with an adhesive strength of at least 4 N/mm$^2$, as moulding tool.

**2.** Use according to claim 1 **characterised in that** the standard deviation of the adhesive strength exhibits measured values of maximum 25 % of the arithmetic mean at six different locations distributed over the surface of the composite material.

**3.** Use according to claim 1 or 2 **characterised in that**

a) the surface of the object is not chemically pre-treated before applying the metallic layer deposited without external electric current; and
b) the metallic layer is not applied by thermal spraying, CVD, PVD or laser treatment.

**4.** Use according to one of claims 1 to 3 **characterised in that** the non-metallic substrate is the surface of the object.

**5.** Use according to claim 1 or 2 **characterised in that** the non-metallic substrate is not the surface of the object.

**6.** Use according to one of the preceding claims **characterised in that** the interface present between the non-metallic substrate and the metallic layer exhibits a roughness with an $R_z$ value of maximum 35 $\mu$m.

**7.** Use according to one of the preceding claims **characterised in that** the interface present between the non-metallic substrate and the metallic layer exhibits a roughness with a $R_a$ value of maximum 5 $\mu$m.

**8.** Use according to one of the preceding claims **characterised in that** the non-metallic substrate contains at least one fibre reinforced polymer, in particular a carbon fibre-reinforced polymer and the diameter of the fibre is less than 10 $\mu$m.

**9.** Use according to one of claims 1 to 5 **characterised in that** the non-metallic substrate contains at least one fibre-reinforced polymer, in particular a glass fibre-reinforced polymer and the diameter of the fibre is more than 10 $\mu$m.

**10.** Use according to claim 9 **characterised in that** the interface present between the non-metallic substrate and the metallic layer exhibits a roughness with an $R_a$ value of maximum 10 $\mu$m.

**11.** Use according to one of claims 9 or 10 **characterised in that** the interface present between the non-metallic substrate and the metallic layer exhibits a roughness with an $R_z$ value of maximum 100 $\mu$m.

**12.** Use according to one of the preceding claims **characterised in that** polymer is selected from the group of polyamide, polyvinyl chloride, polystyrene, epoxy resin, polyether ether ketone, polyoxymethylene, polyformaldehyde, polyacetal, polyurethane, polyether imide, polyphenyl sulphone, polyphenylene sulphide, polyacrylamide, polycarbonate and polyimide.

**13.** Use according to claim 12 **characterised in that** the metallic layer has an adhesive strength of at least 12 N/mm$^2$.

**14.** Use according to one of claims 1 to 11 **characterised in that** the non-metallic substrate is polypropylene or polytetrafluorethylene.

**15.** Use according to one of the preceding claims **characterised in that** the standard deviation of the adhesive strength amounts to maximum 25 %, in particular maximum 15 % of the arithmetic mean.

**16.** Use according to one of the preceding claims **characterised in that** the metal layer deposited without external current is a metal alloy or metal dispersion layer.

**17.** Use according to one of the preceding claims **characterised in that** the metal layer deposited without external current is a copper, nickel or gold layer.

**18.** Use according to one of the preceding claims **characterised in that** the metal layer deposited without external current is a copper, nickel or gold layer with incorporated non-metallic particles.

**19.** Use according to claim 18 or 19 **characterised in that** the non-metallic particles exhibit a hardness of more than 1,500 HV and are selected from the group of silicon carbide, corundum, diamond and tetraboron carbide.

**20.** Use according to claim 18 **characterised in that** the non-metallic particles exhibit friction reducing properties and are selected from the group of polytetrafluoroethylene, molybdenum sulphide, cubic boron nitride and tin sulphide.

**21.** Use according to one of the preceding claims **characterised in that** a layer of aluminium, titanium or their alloys whose surface is anodically oxidised or ceramic treated, is applied onto the metallic layer deposited without external current.

**22.** Use according to claim 21 **characterised in that** between the metallic layer deposited without external current and the layer of aluminium, titanium or their alloys one or several further metallic layers are arranged.

**23.** Use according to claim 21 or 22 **characterised in that** the surface of the object is a ceramic oxide layer of aluminium, titanium or their alloys coloured black by the incorporation of foreign ions.

**24.** Use according to one of the preceding claims as punching, casting or remodelling tool.


**Revendications**

**1.** Utilisation d'un objet dont la surface présente totalement ou partiellement une matière composite, cette matière composite étant constituée d'un substrat non métallique contenant au moins un polymère et d'une couche métallique séparée sans courant parasite posée dessus, d'une adhérence d'au moins 4 N/mm$^2$, en tant qu'outil de formage.

**2.** Utilisation selon la revendication 1, **caractérisée en ce que** l'écart type d'adhérence à six valeurs mesurées réparties sur la surface de la matière composite présente tout au plus 25 % de la valeur moyenne arithmétique.

**3.** Utilisation selon l'une des revendications 1 ou 2, **caractérisée en ce que** :

a) la surface de l'objet avant l'application de la couche métallique séparée sans courant parasite n'est pas soumise à prétraitement chimique ; et
b) la couche métallique n'est pas appliquée par aspersion thermique, par procédé CVD, procédé PVD ou par traitement au laser.

**4.** Utilisation selon l'une des revendications 1 à 3, **caractérisée en ce que** le substrat non métallique est la surface de l'objet.

**5.** Utilisation selon l'une des revendications 1 ou 2, **caractérisée en ce que** le substrat non métallique n'est pas la surface de l'objet.

**6.** Utilisation selon l'une des revendications précédentes, **caractérisée en ce que** la limite entre le substrat non métallique et la couche métallique présente une rugosité d'un indice $R_z$ de 35 $\mu$m tout au plus.

**7.** Utilisation selon l'une des revendications précédentes, **caractérisée en ce que** la limite entre le substrat non métallique et la couche métallique présente une rugosité d'un indice $R_a$ de 5 $\mu$m tout au plus.

**8.** Utilisation selon l'une des revendications précédentes, **caractérisée en ce que** le substrat non métallique contient au moins un polymère renforcé par fibre, notamment un polymère renforcé à la fibre de carbone et que le diamètre de la fibre est inférieur à 10$\mu$m.

**9.** Utilisation selon l'une des revendications 1 à 5, **caractérisée en ce que** le substrat non métallique contient au moins un polymère renforcé par fibre, notamment un polymère renforcé à la fibre de verre et que le diamètre de la fibre est supérieur à 10$\mu$m.

**10.** Utilisation selon la revendication 9, **caractérisée en ce que** la limite entre le substrat non métallique et la couche métallique présente une rugosité d'un indice $R_a$ de 10 $\mu$m tout au plus.

**11.** Utilisation selon l'une des revendications 9 ou 10, **caractérisée en ce que** la limite entre le substrat non métallique et la couche métallique présente une rugosité d'un indice $R_z$ de 100 $\mu$m tout au plus.

**12.** Utilisation selon l'une des revendications précédentes, **caractérisée en ce que** le polymère est choisi parmi le groupe du polyamide, chlorure de polyvinyle, polystyrène, des résines époxy, du polyétheréther-cétone, polyoxyméthylène, polyformaldéhyde, polyacétal, polyuréthane, polyétherimide, polysulfone de phénylène, polysulfure de phénylène, polyarylamide, polycarbonate et polyimide.

**13.** Utilisation selon la revendication 12, **caractérisée en ce que** la couche métallique présente une adhérence d'au moins 12 N/mm$^2$.

**14.** Utilisation selon l'une des revendications 1 à 11, **caractérisée en ce que** le substrat métallique est le polypropylène ou le polytétrafluoréthylène.

**15.** Utilisation selon l'une des revendications précédentes, **caractérisée en ce que** l'écart type d'adhérence représente tout au plus 25 %, en particulier tout au plus 15 % de la valeur moyenne arithmétique.

**16.** Utilisation selon l'une des revendications précédentes, **caractérisée en ce que** la couche métallique séparée sans courant parasite est un alliage métallique ou une couche de dispersion métallique.

**17.** Utilisation selon l'une des revendications précédentes, **caractérisée en ce que** la couche métallique séparée sans courant parasite est une couche de cuivre, de nickel ou d'or.

**18.** Utilisation selon l'une des revendications précédentes, **caractérisée en ce que** la couche métallique séparée sans courant parasite est une couche de cuivre, de nickel ou d'or avec des particules non métalliques insérées.

**19.** Utilisation selon la revendication 18, **caractérisée en ce que** les particules non métalliques présentent une dureté de plus de 1500 HV et sont choisies dans le groupe du carbure de silicium, corindon, diamant et carbure tétraborique.

**20.** Utilisation selon l'une des revendications 18 ou 19, **caractérisée en ce que** les particules non métalliques présentent des propriétés réduisant le coefficient de friction et sont choisies parmi le groupe du polytétrafluoréthylène, sulfure de molybdène, nitrure de bore cubique et du sulfure d'étain.

**21.** Utilisation selon l'une des revendications précédentes, **caractérisée en ce que** sur la couche métallique séparée sans courant parasite est appliquée une couche d'aluminium, de titane ou de leurs alliages, dont la surface est oxydée anodisée ou céramisée.

**22.** Utilisation selon la revendication 21, **caractérisée en ce qu'**une ou plusieurs couches sont encore disposées entre la couche métallique séparée sans courant parasite et la couche d'aluminium, de titane ou de leurs alliages.

**23.** Utilisation selon l'une des revendications 21 ou 22, **caractérisée en ce que** la surface de l'objet est une couche oxydée céramique noircie par l'insertion d'ions étrangers, en aluminium, titane ou leurs alliages.

**24.** Utilisation selon l'une des revendications précédentes en tant qu'outil de découpage, de coulage ou de façonnage.

Abbildung 1

Abbildung 2

Mikrostrukturierung     Ätzen                    ABC mit Metall-
                                                 schicht

Abbildung 3

Abbildung 4 - Stand der Technik